# EUROPÄISCHE PATENTSCHRIFT

(11) **EP 1 502 684 B1**
(45) Veröffentlichungstag und Bekanntmachung des Hinweises auf die Patenterteilung: **13.12.2006**
(21) Anmeldenummer: 03017222.5
(22) Anmeldetag: 30.07.2003
(51) Int. Cl.: B23D 27/04

(54) **Maschinelles Handwerkzeug zum Bearbeiten von Werkstücken, insbesondere in Form einer Schere zum Schlitzen von Blechen**
Hand-held machine tool for machining workpieces, particularly in form of a shear for slitting blanks
Machine portable pour travailler des pièces à usiner, en particulier en forme des ciseaux pour fondre des tôles

(43) Veröffentlichungstag der Anmeldung: 02.02.2005
(73) Patentinhaber: Trumpf Grüsch AG, 7214 Grüsch (CH)
(72) Erfinder: Janutin, Andreas, 7000 Chur (CH); Neuweiler, Andreas, 7000 Chur (CH); Böhringer, Claus, 7206 Igis (CH)
(74) Vertreter: Kohler Schmid Möbus

(56) Entgegenhaltungen:
- DE-B- 1 182 024
- DE-U- 29 804 012

## Beschreibung

Die Erfindung betrifft ein maschinelles Handwerkzeug zum Bearbeiten von Werkstücken, mit einem Bearbeitungswerkzeug sowie mit einem Hubantrieb hierfür, der einen um eine Exzenterdrehachse angetrieben umlaufenden Hubexzenter umfasst, wobei sich der Hubexzenter über seine in Richtung der Exzenterdrehachse verlaufende Außenseite und ein werkzeugseitiges Antriebselement in einer quer zu der Exzenterdrehachse verlaufenden Hubrichtung aneinander abstützen und das werkzeugseitige Antriebselement durch den Hubexzenter in Hubrichtung zu einer Bewegung angetrieben ist, die in eine Arbeitsbewegung des Bearbeitungswerkzeuges mit verstellbaren Bewegungsendlagen umsetzbar ist.

Ein derartiges Handwerkzeug ist in DE 298 04 012 U1 offenbart. Der Stand der Technik betrifft eine Schlitzschere mit einem zweiarmigen Schneidhebel. Dieser ist um eine Schneidhebelachse schwenkbar und wird an einem Hebelarm von einem Exzenter eines motorischen Werkzeugantriebes beaufschlagt. An dem anderen Hebelarm ist der Schneidhebel mit Schneiden für die Blechbearbeitung versehen. Zwei dieser Schneiden erstrecken sich als Längsschneiden in Vorschubrichtung der vorbekannten Schlitzschere. Eine dritte Schneide verläuft als Querschneide in Querrichtung der Längsschneiden. Den Längsschneiden sowie der Querschneide des Schneidhebels sind entsprechende Gegenschneiden an dem Werkzeuggehäuse zugeordnet. Die Schneidhebelachse ist höhenverstellbar. In Abhängigkeit von der Höhenlage der Schneidhebelachse passieren entweder nur die Längsschneiden des Schneidhebels die zugehörigen Gegenschneiden an dem Werkzeuggehäuse, oder aber zusätzlich zu den Längsschneiden passiert auch die Querschneide des Schneidhebels die zugeordnete gehäuseseitige Gegenschneide. Bei der Blechbearbeitung wird in dem erstgenannten Fall unter Bewegen der Schlitzschere in Vorschubrichtung ein zusammenhängender Blechstreifen freigeschnitten. Passiert infolge einer entsprechenden Verstellung der Schneidhebelachse auch die Querschneide des Schneidhebels die zugehörige Gegenschneide, so wird der zuvor freigeschnittene Blechstreifen gekappt.

Zur Höheneinstellung der Schneidhebelachse und somit zur Einstellung der Bewegungsendlagen des mit Schneiden versehenen Schneidhebelarmes dient im Falle der vorbekannten Schlitzschere ein Gewindestellantrieb, der von dem Maschinenbediener mittels einer Handkurbel zu betätigen ist.

Den Stand der Technik dahingehend zu optimieren, dass sich die Einstellung der Bewegungsendlagen des Bearbeitungswerkzeuges vereinfacht, hat sich die vorliegende Erfindung zum Ziel gesetzt.

Erfindungsgemäß gelöst wird diese Aufgabe durch das maschinelle Handwerkzeug gemäß Patentanspruch 1. Nachdem die von dem werkzeugseitigen Antriebselement in Hubrichtung ausgeführte Bewegung in eine Arbeitsbewegung des Bearbeitungswerkzeuges umgesetzt wird, bestimmt die Lage des werkzeugseitigen Antriebselementes in Hubrichtung die Lage des Bearbeitungswerkzeuges in Richtung seiner Arbeitsbewegung. Veränderbar ist die genannte Lage des werkzeugseitigen Antriebselementes und damit auch die genannte Lage des Bearbeitungswerkzeuges durch den erfindungsgemäßen Kurventräger, im Einzelnen durch die an diesem vorgesehene Stellkurve. Aufgrund der Steigung der Stellkurve verändert sich die Lage des werkzeugseitigen Antriebselementes mit der Bewegung der Stellkurve in den Zwischenraum zwischen Hubexzenter und werkzeugseitigem Antriebselement. Erfindungsgemäß bewerkstelligt wird diese Bewegung mittels des umlaufenden Hubexzenters und somit ohne dass der Maschinenbediener eine entsprechende Verstellbewegung ausführen müsste. Voraussetzung für eine Bewegung der Stellkurve in den Zwischenraum zwischen Hubexzenter und werkzeugseitigem Antriebselement ist ein Lösen der für den Kurventräger im Falle der Erfindung vorgesehenen Mitnahmesperre. Allenfalls zum Lösen der Mitnahmesperre für den Kurventräger muss die Bedienperson tätig werden. Der Maschinenbediener kann sich folglich während der gesamten Werkstückbearbeitung im Wesentlichen auf eine zweckmäßige Ausrichtung und Führung des Handwerkzeuges konzentrieren. Qualitativ entsprechend hochwertige Bearbeitungsergebnisse lassen sich mit dem erfindungsgemäßen Handwerkzeug erzielen.

Besondere Ausführungsarten der Erfindung nach Patentanspruch 1 ergeben sich aus den abhängigen Patentansprüchen 2 bis 17.

Gemäß Patentanspruch 2 ist eine funktionssichere Mitnahme des Kurventrägers durch den Hubexzenter aufgrund des anspruchsgemäßen Formschlusses zwischen Hubexzenter und Kurventräger gewährleistet.

Ausweislich Patentanspruch 3 erfolgt das Lösen der Mitnahmesperre für den Kurventräger über den Kurventräger selbst. Im Interesse eines konstruktiv einfach strukturierten und kleinbauenden Werkzeugantriebes wird demnach zum Lösen der Mitnahmesperre ein für die Bewegungsendlagenverstellung funktionsnotwendiges Bauteil selbst genutzt.

Durch einen entsprechenden Vorteil zeichnet sich die Erfindungsbauart nach Patentanspruch 4 aus. Der Hubexzenter übernimmt anspruchsgemäß eine Mehrzahl von Funktionen. Zum einen dient er zum Antrieb des Bearbeitungswerkzeuges. Darüber hinaus nimmt er den Kurventräger zur Verstellung der Bewegungsendlage des Bearbeitungswerkzeuges mit. Schließlich leistet der Hubexzenter zumindest einen Beitrag zum Lösen der Mitnahmesperre für den Kurventräger, wodurch die Mitnahme des Kurventrägers erst ermöglicht wird.

In bevorzugter Ausgestaltung der Erfindung bewirkt ausweislich Patentanspruch 5 eine Auslenkvorrichtung für den Kurventräger das Lösen der für den Kurventräger vorgesehenen Mitnahmesperre und die Bewegung der Stellkurve in den Zwischenraum zwischen Hubexzenter und werkzeugseitigem Antriebselement.

Gemäß Patentanspruch 6 ist die Steigung der Stellkurve an dem Kurventräger derart gewählt, dass die Höhe des Kurventrägers zwischen Hubexzenter und werkzeugseitigem Antriebselement nach wenigstens zwei Auslenkungen des Kurventrägers wieder ihren Ausgangswert annimmt. Nach wenigstens zwei Stellvorgängen ergeben sich folglich wieder die Ausgangsverhältnisse. Nach zumindest zweimaligem Wirksamwerden der Verstellvorrichtung entspricht die Bewegungsendlage des Bearbeitungswerkzeuges wieder der anfänglichen Bewegungsendlage. Die Zweckmäßigkeit der anspruchsgemäßen Maßnahmen erschließt sich beispielsweise im Falle von Schlitzscheren der eingangs als Stand der Technik gewürdigten Art. Anfänglich kann die Bewegungsendlage des mit Schneiden versehenen Armes des Schneidhebels derart eingestellt sein, dass lediglich die Längsschneiden des Schneidhebels mit den Längsgegenschneiden an dem Maschinengehäuse zusammenwirken und dadurch einen zusammenhängenden Blechstreifen freischneiden. Durch ein- oder mehrfache Verstellung des Kurventrägers bzw. der Stellkurve kann für das Schneidwerkzeug dann eine Bewegungsendlage definiert werden, aufgrund derer die Querschneide des Schneidwerkzeuges im Zusammenspiel mit der zugehörigen gehäuseseitigen Gegenschneide den zuvor freigeschnittenen Blechstreifen kappt. Nach einer oder mehreren weiteren Verstellungen ergibt sich wieder der Anfangszustand, bei welchem erneut ein zusammenhängender Blechstreifen freigeschnitten wird.

Das erfindungsgemäße Handwerkzeug nach Patentanspruch 7 ist mit einer Auslenkvorrichtung für den Kurventräger versehen, mittels derer der Kurventräger derart auslenkbar ist, dass er für eine nachfolgende Auslenkung zugänglich wird. Soll der Maschinenbediener die Bewegungsendlage des Bearbeitungswerkzeuges einstellen und wird wenigstens eine nachfolgende Auslenkung selbsttätig bewirkt, so kann sich der Maschinenbediener aufgrund der vorstehenden Erfindungsmerkmale auf ein Auslösen des Einstellvorganges beschränken. Der Bediener hat lediglich für eine einmalige Auslenkung des Kurventrägers zu sorgen. Der oder die nachfolgenden Auslenkungen des Kurventrägers können dann herbeigeführt werden, ohne dass der Bediener hierzu tätig werden müsste.

Im Sinne der Erfindung kann die Auslenkung des Kurventrägers auf unterschiedliche Art und Weise erfolgen. Erfindungsgemäß bevorzugt wird zu dem genannten Zweck eine Fangvorrichtung, wie sie in den Patentansprüchen 8 bis 11 beschrieben ist. Diese Fangvorrichtung blockiert den sich mit dem Hubexzenter und dem werkzeugseitigen Antriebselement bewegenden Kurventräger vorzugsweise formschlüssig. Sie ist im Falle einer Erfindungsbauart von dem Bediener manuell zu betätigen.

Ausweislich Patentanspruch 12 bildet der umlaufende Hubexzenter einen Teil der Auslenkvorrichtung und wirkt als solcher mit der Fangvorrichtung zur Auslenkung des Kurventrägers zusammen.

Patentanspruch 13 betrifft ein erfindungsgemäßes Handwerkzeug, im Falle dessen mit konstruktiv einfachen Mitteln für eine definierte Bewegung des Kurventrägers bei seiner Verstellung gesorgt ist. Der Hubexzenter selbst dient dabei als Führung für den Kurventräger.

Eine zweckmäßige Gestaltung der Fangvorrichtung für einen auf dem Hubexzenter aufsitzenden Kurventräger ist in Patentanspruch 14 beschrieben. Nachdem der anspruchsgemäße Kurventräger eine Mehrzahl von Zahnzwischenräumen aufweist, ist sichergestellt, dass der Formschlussvorsprung der Fangvorrichtung zu jedem beliebigen Zeitpunkt mit einem Zahnzwischenraum in Eingriff gebracht und dadurch die Fangvorrichtung aktiviert werden kann.

Ausweislich Patentanspruch 15 ist in Ausgestaltung der Erfindung eine Mitnahmesperre vorgesehen, die bei Dauerbetrieb des Handwerkzeuges für eine wirksame Sicherung der an der Maschine vorgenommenen Einstellung der Bewegungsendlagen des Bearbeitungswerkzeuges sorgt. Dessen ungeachtet ist die Mitnahmesperre zur Bewegungsendlagenverstellung auf einfache Art und Weise lösbar.

Im Interesse einer konstruktiv einfachen und platzsparenden Antriebskonfiguration kann das Druckelement der Mitnahmesperre für den Kurventräger von dem werkzeugseitigen Antriebselement ausgebildet sein (Patentanspruch 16).

Patentanspruch 17 betrifft mit einer Schere zum Schlitzen insbesondere von Blechen eine besonders zweckmäßige Ausführungsform des erfindungsgemäßen Handwerkzeuges. Aufgrund der Erfindungsmerkmale lässt sich die anspruchsgemäße Schere auf einfache und für den Bediener handhabungsfreundliche Art und Weise in einen Dauerbetriebszustand zum Freischneiden eines zusammenhängenden Materialstreifens oder in einen Betriebszustand überführen, in'welchem der zuvor erstellte Materialstreifen gekappt wird. Im Übrigen kann das erfindungsgemäße Konzept an maschinellen Handwerkzeugen unterschiedlichster Bauart umgesetzt werden.

Nachstehend wird die Erfindung anhand schematischer Darstellungen zu einem Ausführungsbeispiel näher erläutert. Es zeigen:
- Fig. 1: eine elektrische Hand-Schlitzschere für die Blechbearbeitung mit einem.in seinen Bewegungsendlagen verstellbaren Schneidwerkzeug,
- Fig. 2: die Hand-Schlitzschere nach Fig. 1 im Einsatz an einem Blech,
- Fig. 3: eine Explosionsdarstellung des Werkzeugantriebes der Hand-Schlitzschere nach den Fign. 1 und 2 u.a. mit einem zweiteiligen Kurventräger mit Stellkurve und Außenverzahnung,
- Fig. 4: verschiedene Ansichten des mit der Stellkurve versehenen Teils des Kurventrägers nach Fig. 3,
- Fig. 5: verschiedene Ansichten des mit der Außenverzahnung versehenen Teils des Kurventrägers nach Fig. 3,
- Fign. 6 und 7: jeweils drei Einzeldarstellungen zur Veranschaulichung der Funktionsweise der Hand-Schlitzschere nach den Fign. 1 bis 5 beim Freischneiden eines Blechstreifens,
- Fign. 8 und 9: jeweils drei Einzeldarstellungen zur Veranschaulichung der Funktionsweise der Hand-Schlitzschere nach den Fign. 1 bis 7 beim Kappen eines zuvor freigeschnittenen Blechstreifens,
- Fig. 10: stark schematisierte Einzeldarstellungen der Verhältnisse im Bereich des Kurventrägers nach den Fign. 3 bis 5 beim Freischneiden eines Blechstreifens und
- Fig. 11: stark schematisierte Einzeldarstellungen der. Verhältnisse im Bereich des Kurventrägers nach den Fign. 3 bis 5 beim Kappen eines zuvor freigeschnittenen Blechstreifens.

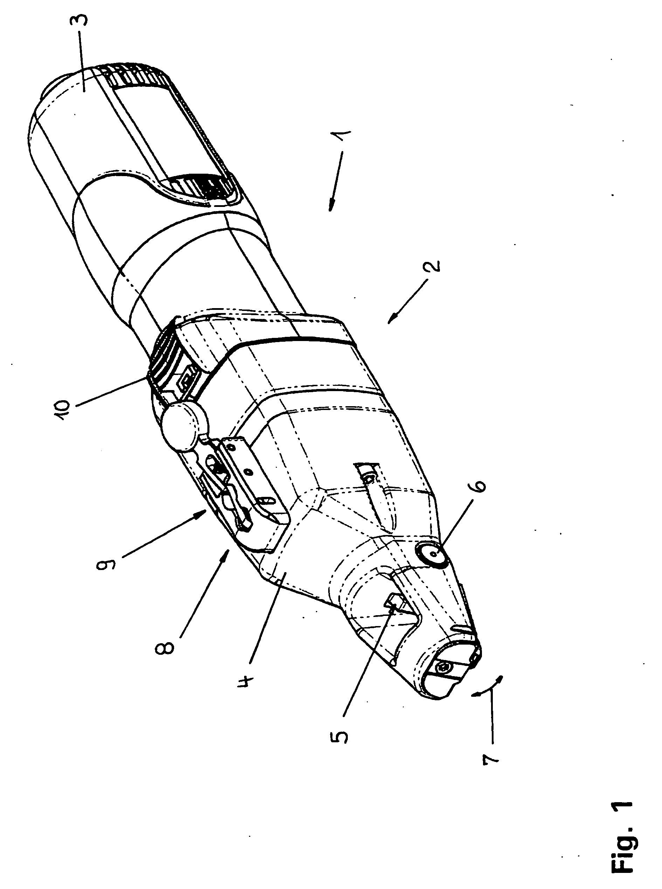

Gemäß Fig. 1 besitzt eine Hand-Schlitzschere 1 ein mehrteiliges Maschinengehäuse 2. In einem hinteren Gehäuseteil 3 ist ein leistungsstarker Elektromotor mit einer in Längsrichtung der Hand-Schlitzschere 1 verlaufenden Motorwelle untergebracht. Ein vorderer Gehäuseteil 4 des Maschinengehäuses 2 nimmt das Getriebe der Hand-Schlitzschere 1 auf und lagert einen Schneidhebel 5 mittels einer Schneidhebelschwenkachse 6. Der Schneidhebel 5 ist um die Schneidhebelschwenkachse 6 in Richtung eines Doppelpfeils 7 beweglich und kann bei Bedarf mit geringem Aufwand ausgebaut werden.

Die Bewegungsendlagen des Schneidhebels 5 sind einstellbar. Hierzu dient eine Verstellvorrichtung 8 mit einer in Fig. 1 erkennbaren Betätigungseinrichtung 9. Die Betätigungseinrichtung 9 ist nahe eines Ein-/Aus-Schalters 10 der Hand-Schlitzschere 1 angeordnet. Ebenso wie der Ein-/Aus-Schalter 10 ist auch die Betätigungseinrichtung 9 der Verstellvorrichtung 8 für den die Hand-Schlitzschere 1 haltenden und führenden Maschinenbediener manuell erreichbar, ohne dass der Bediener zu diesem Zweck an der Hand-Schlitzschere 1 umgreifen müsste.

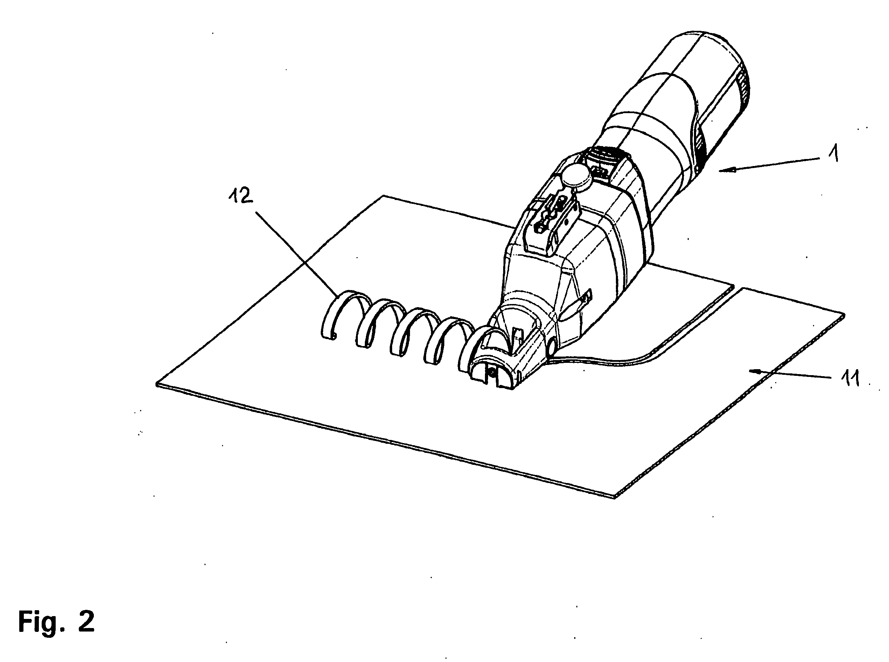

Fig. 2 zeigt die Hand-Schlitzschere 1 beim Schlitzen eines Bleches 11. Dabei wird unter Bewegen der Hand-Schlitzschere 1 in Vorschubrichtung ein Blechstreifen 12 freigeschnitten, der an einer hierfür bestimmten Öffnung des Mäschinengehäuses 2 austritt. Zur Vermeidung von Behinderungen bei der Bearbeitung des Bleches 11 aber auch zur Vermeidung von Kratzern an der Blechoberfläche und/oder zur Vermeidung von Verletzungen des Maschinenbedieners durch einen überlangen Blechstreifen 12 ist dieser von Zeit zu Zeit zu kappen. Die zu diesem Zweck an der Hand-Schlitzschere 1 getroffenen konstruktiven Maßnahmen werden nachfolgend im Einzelnen erläutert.

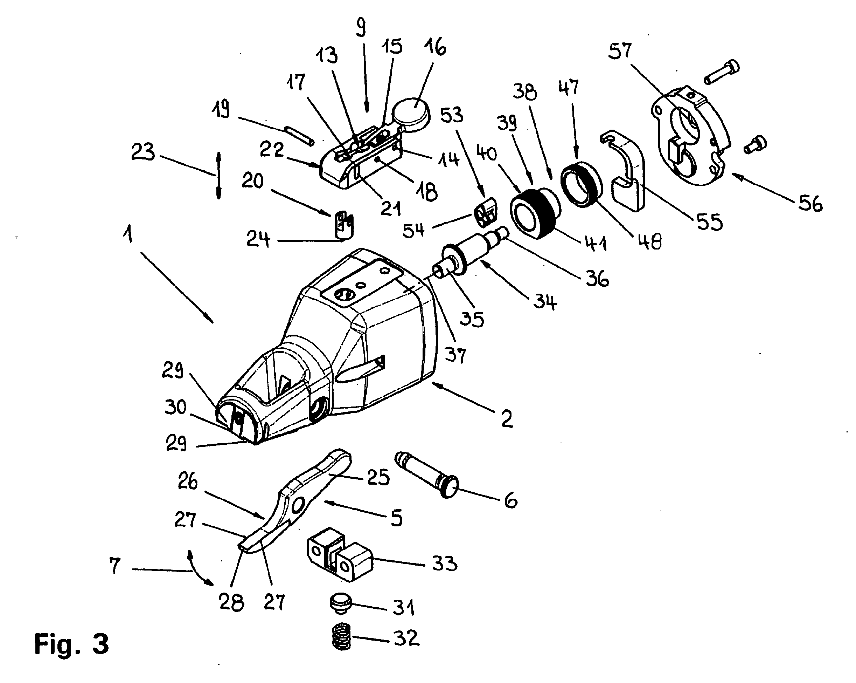

Ausweislich Fig. 3 umfasst die Betätigungseinrichtung 9 zur Verstellung der Bewegungsendlagen des Schneidhebels 5 eine Hebelanordnung 13 mit einem um eine erste Hebelachse 14 schwenkbaren bedienerseitigen Hebel 15. Dieser ist an seinem einen Ende mit einem Druckknopf 16 versehen und mit seinem anderen Ende an einen werkzeugseitigen Hebel 17 angelenkt. Der werkzeugseitige Hebel 17 ist um eine zweite Hebelachse 18 schwenkbar und an seinem von dem bedienerseitigen Hebel 15 abliegenden Ende mittels eines Achsbolzens 19 an ein erstes Steuerelement 20 angelenkt. Der Achsbolzen 19 ist in Langlöchern 21 einer Halterung 22 für die Hebelanordnung 13 in Richtung eines Doppelpfeils 23 geführt.

Mit dem Achsbolzen 19 ist das erste Steuerelement 20 in Richtung des Doppelpfeils 23 beweglich. An seiner von dem Achsbolzen 19 abliegenden Unterseite weist das erste Steuerelement 20 einen zahnförmigen Vorsprung 24 auf.

Der Schneidhebel 5 besitzt als werkzeugseitiges Antriebselement einen Antriebsarm 25 und an der gegenüberliegenden Seite der Schneidhebelschwenkachse 6 einen Schneidarm 26. Letzterer bildet das Bearbeitungswerkzeug der Hand-Schlitzschere 1 und ist zu diesem Zweck mit zwei in Vorschubrichtung der Hand-Schlitzschere 1 verlaufenden Längsschneiden 27 sowie mit einer die Längsschneiden 27 an dem freien Ende des Schneidarms 26 miteinander verbindenden Querschneide 28 versehen. An dem vorderen Gehäuseteil 4 sind den Längsschneiden 27 des Schneidarms 26 zwei entsprechende Längsgegenschneiden 29 zugeordnet. Als Gegenstück zu der Querschneide 28 ist an dem vorderen Gehäuseteil 4 des Maschinengehäuses 2 eine Quergegenschneide 30 vorgesehen.

Der Antriebsarm 25 des Schneidhebels 5 wird an seiner Unterseite über ein Druckstück 31 von einer starken Schraubenfeder 32 beaufschlagt. Die Schraubenfeder 32 stützt sich über ein gehäusefestes Widerlager 33 an dem vorderen Gehäuseteil 4 des Maschinengehäuses 2 ab.

Die für die Werkstückbearbeitung erforderliche Schwenkbewegung des Schneidhebels 5 wird mittels eines Hubantriebes erzeugt. Neben dem in Fig. 3 nicht gezeigten Elektromotor umfasst der Hubantrieb einen Hubexzenter 34, der an Achszapfen 35, 36 drehbar gelagert ist. Die Achszapfen 35, 36 definieren eine Exzenterdrehachse 37, um welche der Hubexzenter 34 umläuft. Durch den umlaufenden Hubexzenter 34 wird der Schneidhebel 5 an seinem Antriebsarm 25 in einer Hubrichtung nach unten bewegt. Diese Bewegung des Antriebsarms 25 erfolgt gegen eine von der Schraubenfeder 32 ausgeübte Rückstellkraft, die nach jedem Abwärtshub des Antriebsarms 25 einen Aufwärtshub in Hubrichtung bewirkt.

Im montierten Zustand ist der Hubexzenter 34 zwischen den Achszapfen 35, 36 im Innern eines zweiteiligen Kurventrägers 38 aufgenommen. An einem ersten Teil 39 des Kurventrägers 38 ist eine Stellkurve 40 angeformt. Diese weist an ihrer Oberfläche eine reibungserhöhende Aufrauhung 41 auf.

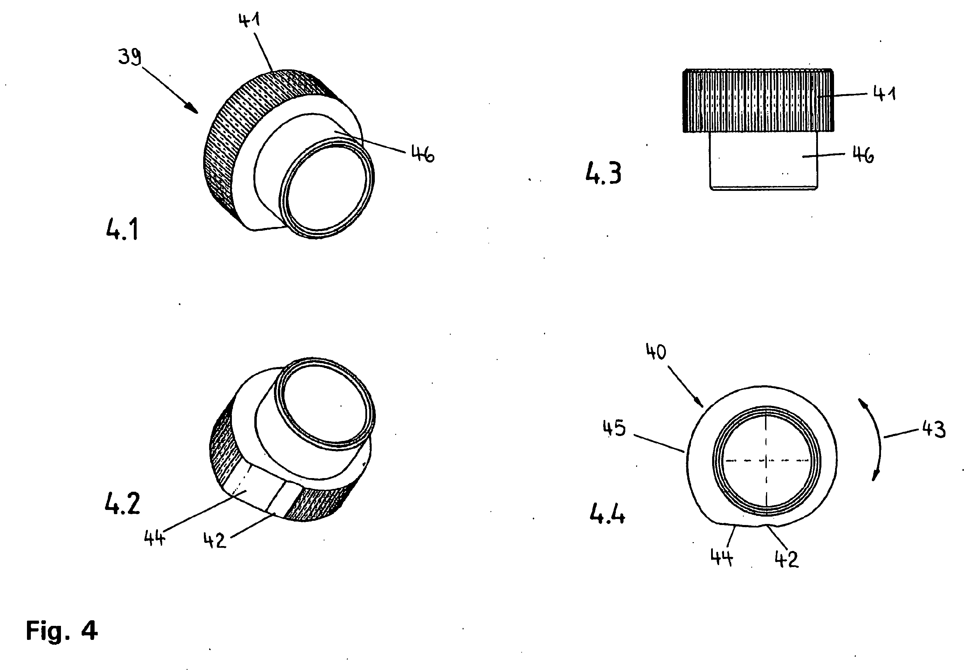

Im Einzelnen ist der mit der Stellkurve 40 versehene erste Teil 39 des Kurventrägers 38 in den Einzeldarstellungen von Fig. 4 gezeigt. Demnach besitzt die Stellkurve 40 eine Vertiefung 42, an welche sich in einer Umfangsrichtung 43 gesehen einseitig ein im Wesentlichen geradliniger Kurventeil 44 anschließt. Die Steigung des geradlinigen Kurventeils 44 ist verhältnismäßig groß. An der dem geradlinigen Kurventeil 44 gegenüberliegenden Seite der Vertiefung 42 erstreckt sich ein im Wesentlichen spiralförmiger Kurventeil 45 mit einer verhältnismäßig geringen Steigung.

An dem mit der Stellkurve 40 versehenen Achsabschnitt des ersten Teils 39 des Kurventrägers 38 setzt ein in radialer Richtung zurückspringender hülsenartiger axialer Abschnitt 46 an. Dieser trägt einen zweiten Teil 47 des Kurventrägers 38. Der zweite Teil 47 des Kurventrägers 38 ist mit dem ersten Teil 39 fest verbunden. Alternativ zu der gezeigten zweiteiligen Ausführung des Kurventrägers 38 wäre auch eine einteilige Ausbildung möglich.

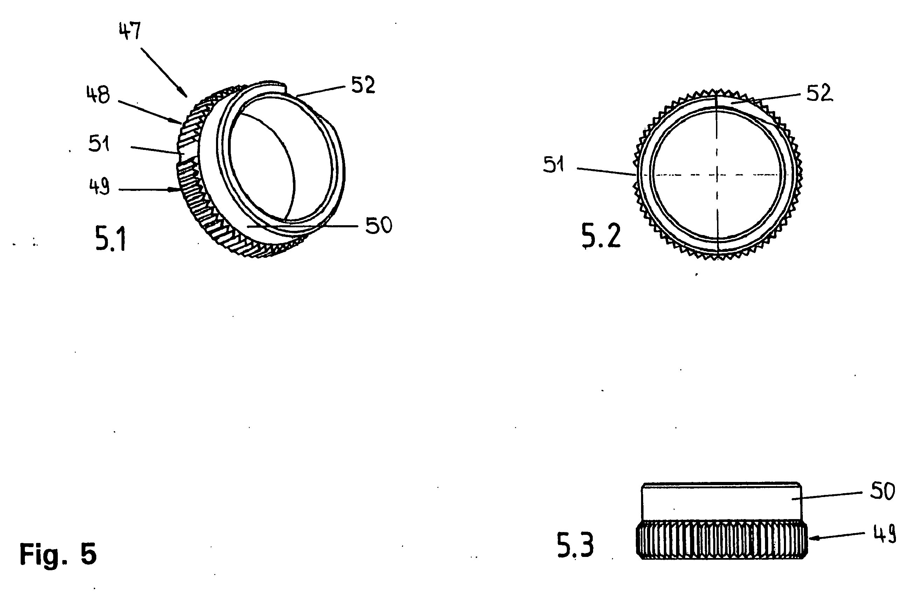

Der zweite Teil 47 des Kurventrägers 38 ist im Detail in Fig. 5 dargestellt. Er besitzt einen mit einer rändelartigen äußeren Verzahnung 48 versehenen Achsabschnitt 49 sowie einen glattwandigen Achsabschnitt 50. Die rändelartige Verzahnung 48 an dem Achsabschnitt 49 weist eine Zahnlücke 51, der glattwandige Achsabschnitt 50 eine keilförmige Ausnehmung 52 auf.

Der Kurventräger 38 mit seinen Teilen 39, 47 ist Teil der Verstellvorrichtung 8 zur Einstellung der Bewegungsendlagen des Schneidhebels 5. Als weitere Komponenten der Verstellvorrichtung 8 sind in Fig. 3 ein zweites Steuerelement 53 mit einem Vorsprung 54 sowie eine Sperrklinke 55 gezeigt. Die Sperrklinke 55 ist an einer rückwärtigen Wand 56 des vorderen Gehäuseteils 4 in Richtung des Doppelpfeils 23 geführt. Darüber hinaus lagert die rückwärtige Wand 56 an einem Lagerauge 57 den Achszapfen 36 des Hubexzenters 34.

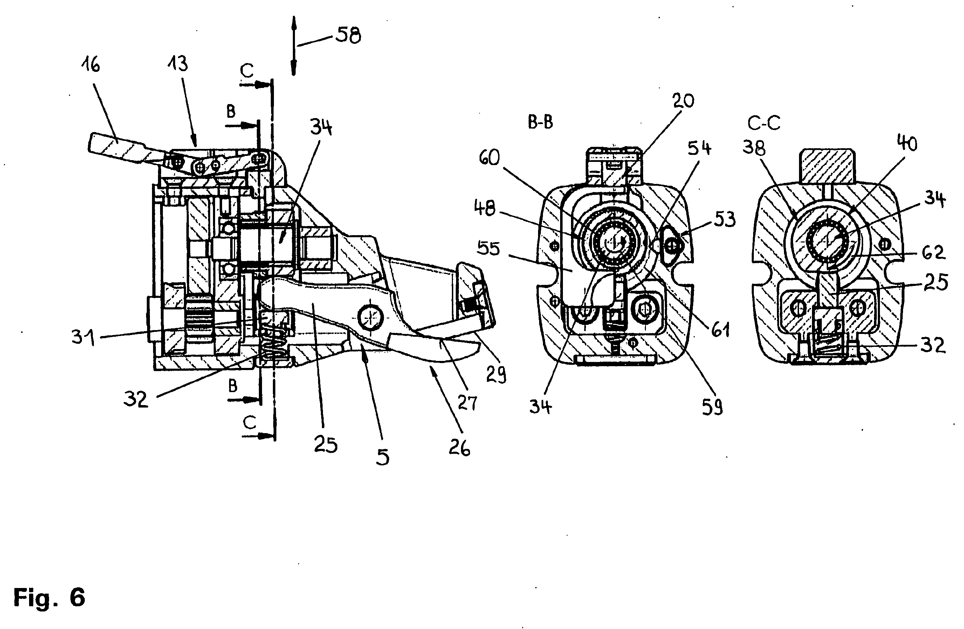

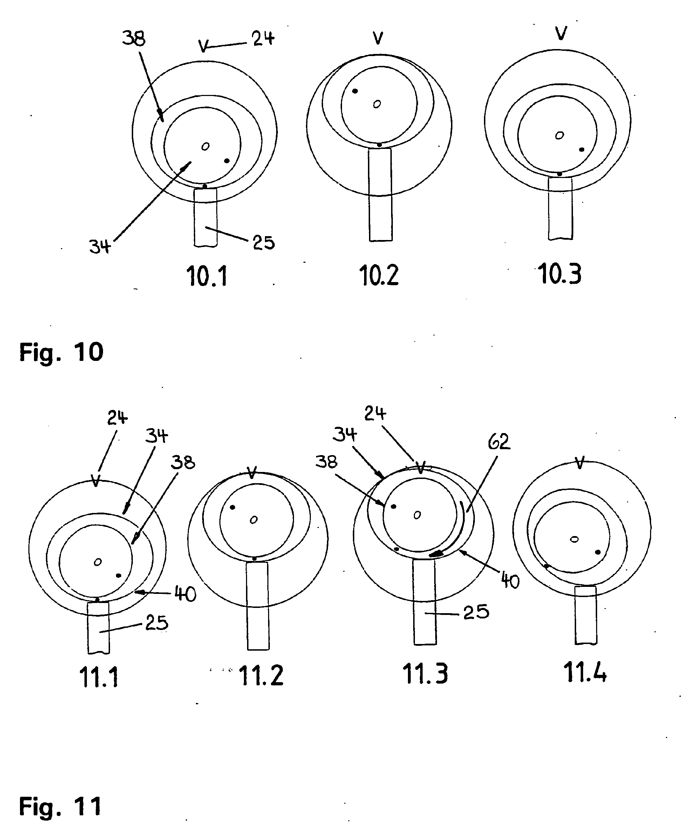

Die Funktionsweise der Hand-Schlitzschere 1 wird anhand der Fign. 6 bis 9 und unter Einbeziehung der Fign 10 und 11 im Einzelnen erläutert.

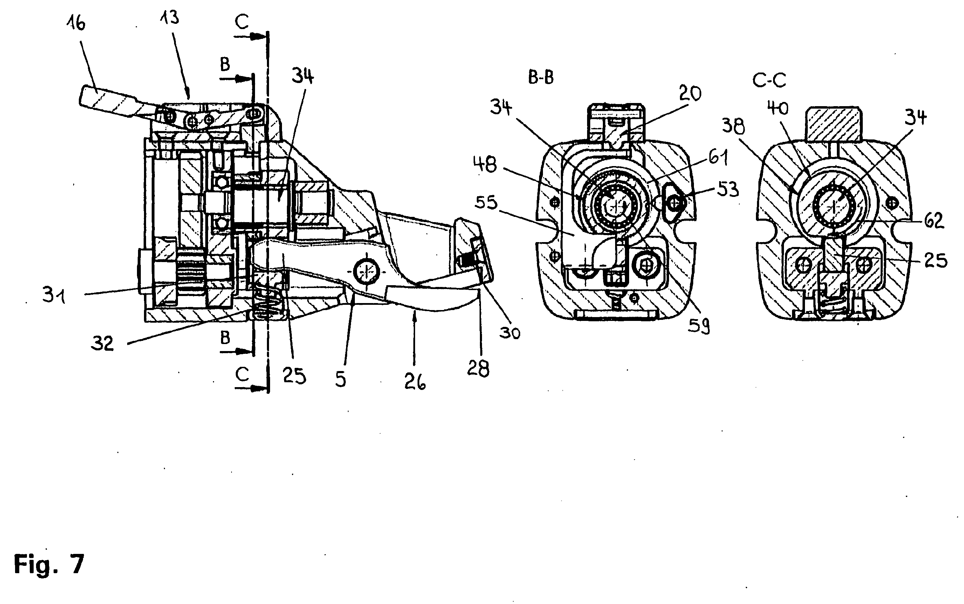

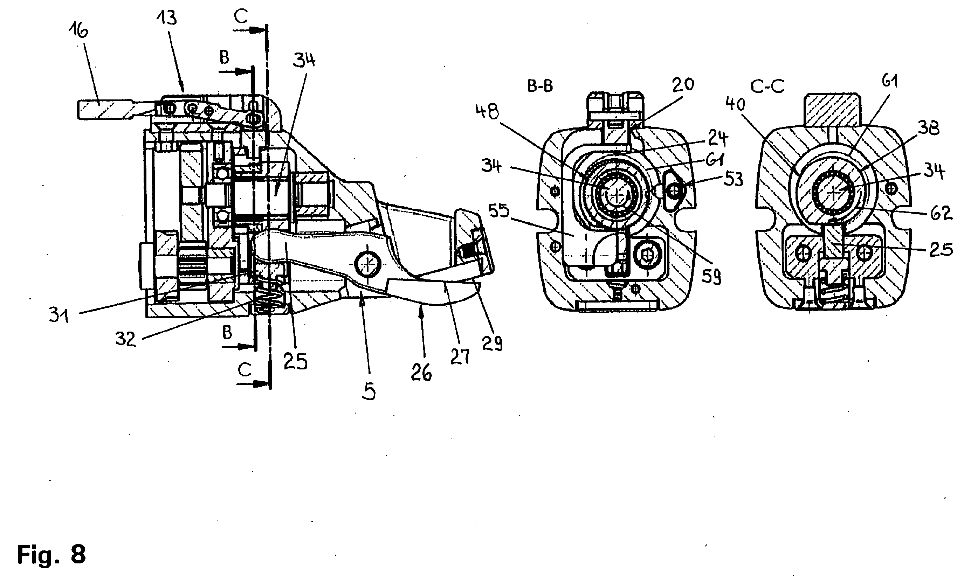

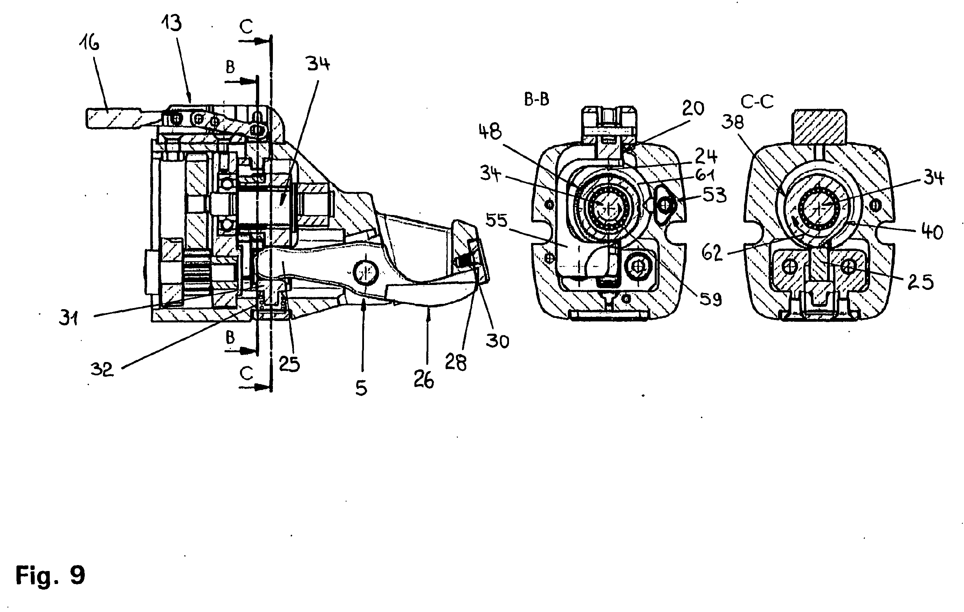

Dabei zeigen die Fign. 6 und 7 die Hand-Schlitzschere 1 bei regulärem Schneidbetrieb, also in demjenigen Betriebszustand, bei welchem der Schneidhebel 5 an dem Blech 11 einen zusammenhängenden Blechstreifen 12 freischneidet. Die Fign. 8 und 9 stellen die Verhältnisse beim Kappen des zuvor freigeschnittenen Blechstreifens 12 dar.

Gemäß Fig. 6 befindet sich der Antriebsarm 25 des Schneidhebels 5 bei regulärem Schneidbetrieb in seiner oberen Endlage; der Schneidarm 26 des Schneidhebels 5 nimmt in Fig. 6 folglich seine untere Endlage bei regulärem Schneidbetrieb ein. Demgegenüber zeigt Fig. 7 den Antriebsarm 25 des Schneidhebels 5 in seiner unteren und den Schneidarm 26 des Schneidhebels 5 in seiner oberen Endlage bei regulärem Schneidbetrieb.

Zwischen den oberen und den unteren Endlagen wird der Schneidhebel 5 mittels des Hubexzenters 34 in einer Hubrichtung 58 hin und her bewegt. In Hubrichtung 58 sind der Hubexzenter 34 und der Antriebsarm 25 des Schneidhebels 5 über den Kurventräger 38, im Einzelnen über die Stellkurve 40, aneinander abgestützt. Ausweislich der rechten Schnittdarstellungen der Fign. 6 und 7 liegt die Stellkurve 40 des Kurventrägers 38 dabei im Bereich der Vertiefung 42 an dem Antriebsarm 25 des Schneidhebels 5 an.

Der Kurventräger 38 bewegt sich mit dem Antriebsarm 25 des Schneidhebels 5. Ungeachtet der "unrunden" Bewegungsbahn des Hubexzenters 34 verändert die Stelle der Abstützung des Kurventrägers 38 an dem Antriebsarm 25 bei der Bewegung des Kurventrägers 38 ihre Lage an dem Antriebsarm 25 nicht. Hierfür sorgt zum einen die Sperrklinke.55, die in die keilförmige Ausnehmung 52 an dem Kurventräger 38 eingreift. Darüber hinaus übt die Schraubenfeder 32 über das Druckstück 31 und den Antriebsarm 25 des Schneidhebels 5 eine betragsmäßig große Normalkraft auf den Kurventräger 38 aus. Aus dieser Normalkraft resultiert nicht zuletzt aufgrund der Aufrauhung 41 an der Oberfläche der Stellkurve 40 eine große, den Kurventräger 38 an dem Antriebsarm 25 haltende Reibkraft. Die Sperrklinke 55 und der federkraftbeaufschlagte Antriebsarm 25 bilden dementsprechend eine Mitnahmesperre für den Kurventräger 38. Hinzu kommt ein Formschluss zwischen dem Antriebsarm 25 des Schneidhebels 5 und der Vertiefung 42 an der Stellkurve 40. Zudem ist die Reibung zwischen der Innenwand des Kurventrägers 38 und dem Hubexzenter 34 mittels eines in den Fign. 6 bis 9 erkennbaren Nadellagers 60 weitgehend reduziert.

Eine Mitnahme des Kurventrägers 38 durch den Hubexzenter 34 unter Drehen des Kurventrägers 38 in den Zwischenraum zwischen Hubexzenter 34 und Antriebsarm 25 wird alles in allem verhindert. Eine Bewegungsbahn 61, die von der rändelartigen Verzahnung 48 an dem Kurventräger 38 bei regulärem Schneidbetrieb und damit verbundenen Hubbewegungen beschrieben wird, ist in den mittleren Schnittdarstellungen der Fign. 6 bis 9 gezeigt. Die sich bei regulärem Schneidbetrieb im Bereich der Abstützung des Kurventrägers 38 an dem Antriebsarm 25 ergebenden Verhältnisse sind stark schematisiert aus Fig. 10 ersichtlich.

Gemäß Fig. 7 ergibt sich für den Schneidarm 26 des Schneidhebels 5 eine obere Bewegungsendlage bzw. eine obere Totpunktlage, bei welcher lediglich die Längsschneiden 27 an dem Schneidarm 26 und die Längsgegenschneiden 29 an dem Maschinengehäuse 2, nicht aber die Querschneide 28 an dem Schneidarm 26 und die gehäuseseitige Quergegenschneide 30 miteinander zusammenwirken.

Soll nun ausgehend von dem in den Fign. 6 und 7 gezeigten Betriebszustand der Hand-Schlitzschere 1 der bei diesem Betriebszustand erstellte Blechstreifen 12 gekappt werden, so ist von dem Bediener der Hand-Schlitzschere 1 der Druckknopf 16 der Verstellvorrichtung 8 in die Position gemäß den Fign. 8 und 9 niederzudrücken. Über die Hebelanordnung 13 bewirkt diese Bewegung des Druckknopfs 16 eine Verlagerung des ersten Steuerelementes 20 in den Abbildungen nach unten. Gleichgerichtet mit dem ersten Steuerelement 20 wird die Sperrklinke 55 gegen die Wirkung einer Federkraft verlagert. Infolgedessen tritt die Sperrklinke 55 aus der keilförmigen Ausnehmung 52 des glattwandigen Achsabschnittes 50 an dem Kurventräger 38 aus. Der Kurventräger 38 behält zunächst trotz der Entriegelung der Sperrklinke 55 seine Position gegenüber dem Antriebsarm 25 des Schneidhebels 5 bei. Grund hierfür ist die zwischen dem Kurventräger 38 und dem federkraftbeaufschlagten Antriebsarm 25 des Schneidhebels 5 wirksame Reibung.

Bei seiner Aufwärtsbewegung mit dem Hubexzenter 34 und dem Antriebsarm 25 kommt der Kurventräger 38 dann aber an seiner rändelartigen Verzahnung 48 in Eingriff mit dem nun abgesenkten zahnartigen Vorsprung 24 an dem ersten Steuerelement 20 (siehe auch Fig. 11.2). Das erste Steuerelement 20 wirkt nun als Fangvorrichtung für den sich mit dem Hubexzenter 34 und dem Antriebsarm 25 bewegenden Kurventräger 38 und blockiert diesen an seiner Außenseite. In der Folge wird der Kurventräger 38 durch den umlaufenden Hubexzenter 34 um die Stelle seiner Blockierung durch das erste Steuerelement 20 ausgelenkt. Diese Auslenkung erfolgt unter Überwindung der zwischen dem Antriebsarm 25 des Schneidhebels 5 und dem Kurventräger 38, im Einzelnen der Stellkurve 40, wirksamen Reibung. Durch den Hubexzenter 34 wird folglich die von dem Antriebsarm 25 bewirkte Mitnahmesperre für den Kurventräger 38 gelöst.

Infolge der Auslenkung bewegt sich die Stellkurve 40 entgegen einer Umlaufrichtung 59 des Hubexzenters 34 in einer Bewegungsrichtung 62 in den Zwischenraum zwischen dem Hubexzenter 34 und dem Antriebsarm 25 des Schneidhebels 5 (siehe auch Fig. 11.3). Aufgrund der Steigung der Stellkurve 40 vergrößert sich mit ihrem Einlaufen zwischen den Hubexzenter 38 und den Antriebsarm 25 die Höhe des Kurventrägers 38 zwischen diesen beiden Bauteilen (siehe auch Fig. 11.4).

Nach der Auslenkung des Kurventrägers 38 durch den Eingriff des ersten Steuerelementes 20 in die rändelartige Verzahnung 48 ist der Kurventräger 38 an dem Antriebsarm 25 des Schneidhebels 5 mit einer Stellung abgestützt, aufgrund derer nach dem ersten Steuerelement 20 nun auch das zweite Steuerelement 53 mit seinem Vorsprung 54 in die rändelartige Verzahnung 48 an dem Kurventräger 38 eingreift. Zuvor war die rändelartige Verzahnung 48 in Umfangsrichtung noch derart ausgerichtet, dass sie beim Passieren des zweiten Steuerelementes 53 im Rahmen der ausgeführten Hübe mit der Zahnlücke 51 auf Höhe des Vorsprungs 54 des zweiten Steuerelementes 53 zu liegen kam und folglich kein Eingriff des Vorsprungs 54 in die rändelartige Verzahnung 48 erfolgen konnte. In Fig. 11 ist das zweite Steuerelement 53 aus Gründen der Darstellungsvereinfachung nicht gezeigt.

Das zweite Steuerelement 53 bildet ebenfalls eine Fangvorrichtung für den Kurventräger 38 und bewirkt als solche ebenfalls eine Blockierung des Kurventrägers 38 an dessen Außenseite. Auch diese Blockierung führt zu einer Auslenkung des Kurventrägers 38 unter der Wirkung des umlaufenden Hubexzenters 34 und damit verbunden zu einer fortgesetzten Bewegung der Stellkurve 40 in ihrer Bewegungsrichtung 62.

Befindet sich bei demjenigen Aufwärtshub des Kurventrägers 38, der sich an den Abwärtshub nach dem erstmaligen Eingreifen des ersten Steuerelementes 20 in die rändelartige Verzahnung 48 anschließt, das erste Steuerelement 20 nach wie vor in seiner abgesenkten Stellung, so bewirkt das erste Steuerelement 20 eine weitere Auslenkung des Kurventrägers 38 und somit eine weitere Bewegung der Stellkurve 40 in den Zwischenraum zwischen Hubexzenter 34 und Antriebsarm 25 des Schneidhebels 5.

Gibt der Bediener der Hand-Schlitzschere 1 den Druckknopf 16 unmittelbar nach dem erstmaligen Eingriff des ersten Steuerelementes 20 in die rändelartige Verzahnung 48 frei, so kehrt das erste Steuerelement 20 selbsttätig in seine Ausgangslage zurück. Bewirkt wird diese Rückstellbewegung des ersten Steuerelementes 20 durch eine zu diesem Zweck vorgesehene Rückstellfeder an der Hebelanordnung 13. In diesem Fall wird nach dem erstmaligen und dann auch einmaligen Eingriff des ersten Steuerelementes 20 in die rändelartige Verzahnung 48 eine weitere Auslenkung des Kurventrägers 38 allein durch das zweite Steuerelement 53 herbeigeführt.

In beiden Fällen bewegt sich die Stellkurve 40 mehr und mehr in den Zwischenraum zwischen Hubexzenter 34. und Antriebsarm 25 des Schneidhebels 5 hinein. Damit verbunden ist eine fortlaufende Zunahme der Höhe des Kurventrägers 38 zwischen dem Hubexzenter 34 und dem Antriebsarm 25. Daraus wiederum resultiert eine Verlagerung des oberen sowie des unteren Totpunktes des Antriebsarmes 25 des Schneidhebels 5 nach unten. Damit einher geht eine gegensinnige Verlagerung des oberen sowie des unteren Totpunktes des Schneidarmes 26 an dem Schneidhebel 5. Der Schneidarm 26 des Schneidhebels 5 bewegt sich folglich zwischen den in den Fign. 8 und 9 gezeigten Endlagen hin und her. In seiner oberen Bewegungsendlage gemäß Fig. 9 wirkt der Schneidarm 26 an der Querschneide 28 mit der Quergegenschneide 30 an dem Maschinengehäuse 2 zusammen. Der zuvor erstellte Blechstreifen 12 wird folglich gekappt. Eine Vergrößerung der Anzahl der Fangvorrichtungen für den Kurventräger 38 hätte eine schnellere Bewegungsendlagenverstellung zur Folge.

Fig. 8 zeigt in seiner rechten Schnittdarstellung den Kurventräger 38 vor seiner erstmaligen Auslenkung durch das erste Steuerelement 20. In Fig. 9 ist der Kurventräger 38 in derjenigen Stellung gezeigt, die der maximalen Endlagenverstellung des Schneidhebels 5 zugeordnet ist. Eine weitere Auslenkung des Kurventrägers 38 ausgehend von den Verhältnissen gemäß Fig. 9 bewirkt eine Überführung des Kurventrägers 38 in seine Ausgangslage vor Beginn der Bewegungsendlagenverstellung. In dieser Ausgangslage liegt dann die rändelartige Verzahnung 48 an dem Kurventräger 38 beim Passieren des Vorsprungs 54 des zweiten Steuerelementes 53 dem Vorsprung 54 wieder mit der Zahnlükke 51 gegenüber. Eine weitere Auslenkung des Kurventrägers 38 durch das zweite Steuerelement 53 ist damit nicht möglich. Ist darüber hinaus auch das erste Steuerelement 20 in seine zurückgezogene Ausgangsposition überführt, so kann die Hand-Schlitzschere 1 wieder im regulären Schneidbetrieb arbeiten und erneut einen zusammenhängenden Blechstreifen 12 freischneiden.

Die Überführung des Kurventrägers 38 aus einer Stellung gemäß Fig. 9 in die Ausgangsstellung gemäß den Fign. 6 und 7 wird durch die Schraubenfeder 32 und die Gestalt der Stellkurve 40 unterstützt. Über den Antriebsarm 25 übt die Schraubenfeder 32 auf die Stellkurve 40 eine Kraft aus, die den Kurventräger 38 an dem gemäß Fig. 9 relativ steil stehenden geradlinigen Kurventeil 44 der Stellkurve 40 beaufschlagt und dadurch eine Verstellung des Kurventrägers 38 ungeachtet der Reibung zwischen der Stellkurve 40 und dem Antriebsarm 25 bewirkt.

Die Sperrklinke 55 kehrt nach einer vollständigen Umdrehung des Kurventrägers 38 unter der Wirkung der sie beaufschlagenden Rückstellkraft in ihre Sperrstellung an dem glattwandigen Achsabschnitt 50 des Kurventrägers 38 zurück und greift dann wieder in die keilförmige Ausnehmung 52 an dem Kurventräger 38 ein.

## Patentansprüche

1. Maschinelles Handwerkzeug zum Bearbeiten von Werkstücken, mit einem Bearbeitungswerkzeug (26) sowie mit einem Hubantrieb hierfür, der einen um eine Exzenterdrehachse (37) angetrieben umlaufenden Hubexzenter (34) umfasst, wobei sich der Hubexzenter (34) über seine in Richtung der Exzenterdrehachse (37) verlaufende Außenseite und ein werkzeugseitiges Antriebselement (25) in einer quer zu der Exzenterdrehachse (37) verlaufenden Hubrichtung (58) aneinander abstützen und das werkzeugseitige Antriebselement (25) durch den Hubexzenter (34) in Hubrichtung (58) zu einer Bewegung angetrieben ist, die in eine Arbeitsbewegung des Bearbeitungswerkzeuges (26) mit verstellbaren Bewegungsendlagen umsetzbar ist, **dadurch gekennzeichnet, dass** zwischen dem Hubexzenter (34) und dem werkzeugseitigen Antriebselement (25) ein mit diesen bewegbarer Kurventräger (38) mit einer Stellkurve (40) vorgesehen ist und der Hubexzenter (34) und das werkzeugseitige Antriebselement (25) über die Stellkurve (40) in Hubrichtung (58) aneinander abgestützt sind und dass für den Kurventräger (38) eine zur Verstellung der Bewegungsendlage des Bearbeitungswerkzeuges (26) lösbare Mitnahmesperre vorgesehen ist, wobei bei gelöster Mitnahmesperre der Kurventräger (38) von dem umlaufenden Hubexzenter (34) unter Bewegen der Stellkurve (40) in den Zwischenraum zwischen Hubexzenter (34) und werkzeugseitigem Antriebselement (25) mitnehmbar ist, wobei bei wirksamer Mitnahmesperre der Kurventräger (38) gegen eine derartige Mitnahme gesperrt ist und wobei die Stellkurve (40) in ihrer Bewegungsrichtung (62) eine Steigung aufweist.

2. Maschinelles Handwerkzeug nach Anspruch 1, **dadurch gekennzeichnet, dass** der Kurventräger (38) von dem Hubexzenter (34) formschlüssig mitnehmbar ist.

3. Maschinelles Handwerkzeug nach einem der vorhergehenden Ansprüche, **dadurch gekennzeichnet, dass** die Mitnahmesperre für den Kurventräger (38) über den Kurventräger (38) lösbar ist.

4. Maschinelles Handwerkzeug nach einem der vorhergehenden Ansprüche, **dadurch gekennzeichnet, dass** die Mitnahmesperre für den Kurventräger (38) durch den umlaufenden Hubexzenter (34) lösbar ist.

5. Maschinelles Handwerkzeug nach einem der vorhergehenden Ansprüche, **dadurch gekennzeichnet, dass** für den Kurventräger (38) eine Auslenkvorrichtung vorgesehen ist, mittels derer der Kurventräger (38) unter Lösen der Mitnahmesperre und Bewegen der Stellkurve (40) in den Zwischenraum zwischen Hubexzenter (38) und werkzeugseitigem Antriebselement (25) auslenkbar ist.

6. Maschinelles Handwerkzeug nach einem der vorhergehenden Ansprüche, **dadurch gekennzeichnet, dass** die Steigung der Stellkurve (40) an dem Kurventräger (38) derart gewählt ist, dass der Kurventräger (38) zwischen dem Hubexzenter (34) und dem werkzeugseitigen Antriebselement (25) nach wenigstens zwei Auslenkungen des Kurventrägers (38) eine Höhe in Richtung der gegenseitigen Abstützung von Kurventräger (38) und werkzeugseitigem Antriebselement (25) aufweist, welche der Höhe des Kurventrägers (38) vor den wenigstens zwei Auslenkungen entspricht.

7. Maschinelles Handwerkzeug nach einem der vorhergehenden Ansprüche, **dadurch gekennzeichnet, dass** für den Kurventräger (38) eine Auslenkvorrichtung vorgesehen ist, mittels derer er derart auslenkbar ist, dass er für eine nachfolgende Auslenkung zugänglich ist.

8. Maschinelles Handwerkzeug nach einem der vorhergehenden Ansprüche, **dadurch gekennzeichnet, dass** die Auslenkvorrichtung für den Kurventräger (38) wenigstens eine Fangvorrichtung (20, 53) umfasst und dass die Mitnahmesperre unter Blockieren des sich mit dem werkzeugseitigen Antriebselement (25) bewegenden Kurventrägers (38) mittels der Fangvorrichtung (20, 53) lösbar und die Stellkurve (40) an dem Kurventräger (38) in den Zwischenraum zwischen Hubexzenter (38) und werkzeugseitigem Antriebselement (25) bewegbar ist.

9. Maschinelles Handwerkzeug nach einem der vorhergehenden Ansprüche, **dadurch gekennzeichnet, dass** wenigstens eine Fangvorrichtung (20, 53) für den Kurventräger (38) zumindest ein Formschlusselement umfasst, das mit zumindest einem Gegenstück an dem Kurventräger (38) in Eingriff bringbar ist.

10. Maschinelles Handwerkzeug nach einem der vorhergehenden Ansprüche, **dadurch gekennzeichnet, dass** wenigstens eine Fangvorrichtung (20, 53) für den Kurventräger (38) als Formschlusselement einen Formschlussvorsprung (24, 54) und als Gegenstück hierzu wenigstens eine an dem Kurventräger (38) vorgesehene Formschlussaufnahme umfasst.

11. Maschinelles Handwerkzeug nach einem der vorhergehenden Ansprüche, **dadurch gekennzeichnet, dass** wenigstens eine Fangvorrichtung (20, 53) mittels eines Handbetätigungselementes steuerbar ist.

12. Maschinelles Handwerkzeug nach einem der vorhergehenden Ansprüche, **dadurch gekennzeichnet, dass** der umlaufende Hubexzenter (34) einen Teil der Auslenkvorrichtung bildet und dass der mittels der Fangvorrichtung (20, 53) blockierte Kurventräger (38) durch den umlaufenden Hubexzenter (34) auslenkbar ist.

13. Maschinelles Handwerkzeug nach einem der vorhergehenden Ansprüche, **dadurch gekennzeichnet, dass** der Kurventräger (38) bogenförmig ausgebildet ist und auf der Außenseite des Hubexzenters (34) aufsitzt, wobei der Kurventräger (38) den Hubexzenter (34) in Umfangsrichtung wenigstens teilweise, vorzugsweise vollständig, umschließt.

14. Maschinelles Handwerkzeug nach einem der vorhergehenden Ansprüche, **dadurch gekennzeichnet, dass** wenigstens eine Fangvorrichtung (20, 53) für den auf dem Hubexzenter (34) aufsitzenden Kurventräger (38) eine Mehrzahl von Formschlussaufnahmen aufweist, die von in Umfangsrichtung des Kurventrägers (38) aufeinander folgenden Zahnzwischenräumen einer Verzahnung (48) an dem Kurventräger (38) gebildet sind.

15. Maschinelles Handwerkzeug nach einem der vorhergehenden Ansprüche, **dadurch gekennzeichnet, dass** die Mitnahmesperre für den Kurventräger (38) ein den Kurventräger (38) dauerhaft beaufschlagendes Druckelement umfasst und dass unter Überwindung eines zwischen dem Kurventräger (38) und dem Druckelement wirksamen Reib- und/oder Formschlusses die Mitnahmesperre lösbar und der Kurventräger (38) von dem umlaufenden Hubexzenter (34) unter Bewegen der Stellkurve (40) in den Zwischenraum zwischen Hubexzenter (34) und werkzeugseitigem Antriebselement (25) mitnehmbar ist.

16. Maschinelles Handwerkzeug nach einem der vorhergehenden Ansprüche, **dadurch gekennzeichnet, dass** das Druckelement der Mitnahmesperre für den Kurventräger (38) von dem werkzeugseitigen Antriebselement (25) ausgebildet ist.

17. Maschinelles Handwerkzeug nach einem der vorhergehenden Ansprüche in Form einer Schere zum Schlitzen insbesondere von Blechen (11), **dadurch gekennzeichnet, dass** das Bearbeitungswerkzeug (26) von dem einen, als Schneidarm vorgesehenen Arm und das werkzeugseitige Antriebselement (25) von dem anderen, als Antriebsarm vorgesehenen Arm eines um eine Schwenkachse schwenkbar gelagerten zweiarmigen Schneidhebels (5) ausgebildet sind und dass der Schneidarm zwei in einer Werkzeug-vorschubrichtung verlaufende und quer dazu voneinander beabstandete Längsschneiden (27) sowie eine an dem schwenkachsfernen Ende des Schneidarms quer zu den Längsschneiden (27) verlaufende Querschneide (28) aufweist und den Längsschneiden (27) sowie der Querschneide (28) an dem Schneidarm Längsgegenschneiden (29) sowie eine Quergegenschneide (30) an einem Scherengehäuse zugeordnet sind, wobei unter Bewegen der Stellkurve (40) des Kurventrägers (38) in den Zwischenraum zwischen dem Hubexzenter (34) und dem Antriebsarm des Schneidhebels (5) die Schere wahlweise in einen Betriebszustand, in welchem lediglich die Längsschneiden (27) und die Längsgegenschneiden (29) einander passieren oder in einen Betriebszustand überführbar ist, in welchem auch die Querschneide (28) und die Quergegenschneide (30) einander passieren.

## Claims

1. A hand-operated machine tool for machining workpieces, comprising a machining tool (26) and a stroke drive therefor which comprises a rotating stroke eccentric (34) driven about a rotation axis (37), wherein the stroke eccentric (34), via its outer surface extending in the direction of the rotation axis (37), and a tool-side driving member (25) are supported against one another in a stroke direction (58) extending transversely to the rotation axis (37), and the tool-side driving member (25) is driven by the stroke eccentric (34) in the stroke direction (58) to execute a movement which can be converted into a working movement of the machining tool (26) with adjustable movement end positions, **characterised in that** a cam carrier (38) with an adjusting cam (40) is provided between the stroke eccentric (34) and the tool-side driving member (25) and is movable together therewith, and the stroke eccentric (34) and the tool-side driving member (25) are supported against one another in the stroke direction (58) via the adjusting cam (40), and **in that** a retaining stop, which is releasable for adjustment of the movement end position of the machining tool (26), is provided for the cam carrier (38), wherein the cam carrier (38) is drivable by the rotating stroke eccentric (34) when the retaining stop is released, with movement of the adjusting cam (40) into the space between the stroke eccentric (34) and the tool-side driving member (25), wherein the cam carrier (38) is locked against being driven when the retaining stop is active, and wherein the adjusting cam (40) has a pitch in its direction of movement (62).

2. A hand-operated machine tool according to claim 1, **characterised in that** the cam carrier (38) is drivable by the stroke eccentric (34) by means of a positive connection.

3. A hand-operated machine tool according to either one of the preceding claims, **characterised in that** the retaining stop for the cam carrier (38) is releasable via the cam carrier (38).

4. A hand-operated machine tool according to any one of the preceding claims, **characterised in that** the retaining stop for the cam carrier (38) is releasable by the rotating stroke eccentric (34).

5. A hand-operated machine tool according to any one of the preceding claims, **characterised in that** a deflection device is provided for the cam carrier (38), by means of which deflection device the cam carrier (38) is deflectable, with releasing the retaining stop and moving the adjusting cam (40) into the space between the stroke eccentric (34) and the tool-side driving member (25).

6. A hand-operated machine tool according to any one of the preceding claims, **characterised in that** the pitch of the adjusting cam (40) on the cam carrier (38) is selected so that the cam carrier (38) between the stroke eccentric (34) and the tool-side driving member (25) after at least two deflections of the cam carrier (38) has a height in the direction of the mutual support between the cam carrier (38) and the tool-side driving member (25) which corresponds to the height of the cam carrier (38) before the at least two deflections.

7. A hand-operated machine tool according to any one of the preceding claims, **characterised in that** a deflection device is provided for the cam carrier (38), by means of which deflection device the cam carrier (38) is deflectable so that it is accessible for subsequent deflection.

8. A hand-operated machine tool according to any one of the preceding claims, **characterised in that** the deflection device for the cam carrier (38) comprises at least one catching device (20, 53) and **in that** the retaining stop is releasable by means of the catching device (20, 53), which blocks the cam carrier (38) moving with the tool-side driving member (25), and the adjusting cam (40) on the cam carrier (38) is movable into the space between the stroke eccentric (34) and the tool-side driving member (25).

9. A hand-operated machine tool according to any one of the preceding claims, **characterised in that** at least one catching device (20, 53) for the cam carrier (38) comprises at least one positive-locking member which can be brought into engagement with at least one counterpart on the cam carrier (38).

10. A hand-operated machine tool according to any one of the preceding claims, **characterised in that** at least one catching device (20, 53) for the cam carrier (38) comprises a positive-locking projection (24, 54) as a positive-locking member and, as a counterpart thereto, at least one positive-locking recess provided in the cam carrier (38).

11. A hand-operated machine tool according to any one of the preceding claims, **characterised in that** at least one catching device (20, 53) is controllable by means of a manual actuating member.

12. A hand-operated machine tool according to any one of the preceding claims, **characterised in that** the rotating stroke eccentric (34) forms part of the deflection device and **in that** the cam carrier (38) blocked by means of the catching device (20, 53) is deflectable by the rotating stroke eccentric (34).

13. A hand-operated machine tool according to any one of the preceding claims, **characterised in that** the cam carrier (38) is curved and sits on the outside of the stroke eccentric (34), wherein the cam carrier (38) at least partly, preferably completely, surrounds the stroke eccentric (34) in the circumferential direction.

14. A hand-operated machine tool according to any one of the preceding claims, **characterised in that** at least one catching device (20, 53) for the cam carrier (38) sitting on the stroke eccentric (34) has a plurality of positive-locking recesses formed by tooth spaces in a toothing (48) on the cam carrier (38), the tooth spaces following one another in the circumferential direction of the cam carrier (38).

15. A hand-operated machine tool according to any one of the preceding claims, **characterised in that** the retaining stop for the cam carrier (38) comprises a thrust member which permanently acts upon the cam carrier (38) and **in that**, by overcoming a frictional and/or positive connection acting between the cam carrier (38) and the thrust member, the retaining stop is releasable and the cam carrier (38) is drivable by the rotating stroke eccentric (34), with movement of the adjusting cam (40) into the space between the stroke eccentric (34) and the tool-side driving member (25).

16. A hand-operated machine tool according to any one of the preceding claims, **characterised in that** the thrust member of the retaining stop for the cam carrier (38) is formed by the tool-side driving member (25).

17. A hand-operated machine tool according to any one of the preceding claims in the form of a shear for slitting in particular metal sheets (11), **characterised in that** the machining tool (26) is formed by the one arm, provided as a cutting arm, and the tool-side driving member (25) is formed by the other arm, provided as a driving arm, of a two-armed cutting lever (5) mounted so as to be pivotable about a pivoting axis, and **in that** the cutting arm has two longitudinal blades (27) extending in a tool feed direction and spaced apart transversely thereto and a transverse blade (28) extending transversely to the longitudinal blades (27) at the end of the cutting arm remote from the pivoting axis, and longitudinal counterblades (29) and a transverse counterblade (30) on a shear housing are associated with the longitudinal blades (27) and the transverse blade (28) on the cutting arm, wherein, with movement of the adjusting cam (40) of the cam carrier (38) into the space between the stroke eccentric (34) and the driving arm of the cutting lever (5), the shear can be set either to an operating state in which only the longitudinal blades (27) and the longitudinal counterblades (29) pass one another or to an operating state in which the transverse blade (28) and the transverse counterblade (30) also pass one another.

## Revendications

1. Outil à main mécanique pour travailler des pièces à usiner, avec un outil de travail (26) ainsi qu'avec un entraînement de levage à cet effet qui comprend un excentrique de levage (34) entraîné de manière rotative autour d'un axe de rotation de l'excentrique (37), l'excentrique de levage (34) s'appuyant par son côté extérieur se profilant dans le sens de l'axe de rotation de l'excentrique (37) sur un élément d'entraînement côté outil (25) dans un sens de levage (58) transversal à l'axe de rotation de l'excentrique (37) et l'élément d'entraînement côté outil (25) étant entraîné par l'excentrique de levage (34) dans le sens de levage (58) dans un mouvement qui peut être transformé en un mouvement de travail de l'outil de travail (26) avec des positions finales de mouvement réglables, **caractérisé en ce qu'**entre l'excentrique de levage (34) et l'élément d'entraînement côté outil (25), un support de came (38) mobile avec ceux-ci et avec une came de réglage (40) est prévu et l'excentrique de levage (34) et l'élément d'entraînement côté outil (25) sont appuyés l'un sur l'autre dans le sens de levage (58) par la came de réglage (40) et **en ce qu'**un dispositif de blocage d'entraînement qui peut être débloqué pour régler la position finale de mouvement de l'outil de travail (26) est prévu pour le support de came (38), le support de came (38) étant entraînable, lorsque le dispositif de blocage d'entraînement est débloqué, dans l'espace intermédiaire entre l'excentrique de levage (34) et l'élément d'entraînement côté outil (25) par l'excentrique de levage (34) en déplaçant la came de réglage (40), le support de came (38) étant bloqué, lorsque le dispositif de blocage d'entraînement est actif, contre un tel entraînement et la came de réglage (40) présentant une rampe ascendante dans son sens de déplacement (62).

2. Outil à main mécanique selon la revendication 1, **caractérisé en ce que** le support de came (38) est entraînable en complémentarité de forme par l'excentrique de levage (34).

3. Outil à main mécanique selon l'une des revendications précédentes, **caractérisé en ce que** le dispositif de blocage d'entraînement pour le support de came (38) peut être débloqué par le support de came (38).

4. Outil à main mécanique selon l'une des revendications précédentes, **caractérisé en ce que** le dispositif de blocage d'entraînement pour le support de came (38) peut être débloqué par l'excentrique de levage (34) rotatif.

5. Outil à main mécanique selon l'une des revendications précédentes, **caractérisé en ce que** pour le support de came (38), un dispositif de déviation est prévu au moyen duquel le support de came (38) peut être dévié dans l'espace intermédiaire entre l'excentrique de levage (34) et l'élément d'entraînement côté outil (25) en débloquant le dispositif de blocage d'entraînement et en déplaçant la came de réglage (40).

6. Outil à main mécanique selon l'une des revendications précédentes, **caractérisé en ce que** la rampe ascendante de la came de réglage (40) sur le support de came (38) est choisie de manière à ce que le support de came (38) entre l'excentrique de levage (34) et l'élément d'entraînement côté outil (25), après au moins deux déviations du support de came (38), présente une hauteur dans le sens de l'appui réciproque du support de came (38) et de l'élément d'entraînement côté outil (25), laquelle correspond à la hauteur du support de came (38) avant les au moins deux déviations.

7. Outil à main mécanique selon l'une des revendications précédentes, **caractérisé en ce que** pour le support de came (38), un dispositif de déviation est prévu, au moyen duquel il peut être dévié de façon qu'il soit accessible pour une déviation ultérieure.

8. Outil à main mécanique selon l'une des revendications précédentes, **caractérisé en ce que** le dispositif de déviation pour le support de came (38) comprend au moins un dispositif de collecte (20, 53) et **en ce que** le dispositif de blocage d'entraînement peut être débloqué en bloquant le support de came (38) se déplaçant avec l'élément d'entraînement côté outil (25) au moyen du dispositif de collecte (20, 53) et la came de réglage (40) sur le support de came (38) est déplaçable dans l'espace intermédiaire entre l'excentrique de levage (34) et l'élément d'entraînement côté outil (25).

9. Outil à main mécanique selon l'une des revendications précédentes, **caractérisé en ce qu'**au moins un dispositif de collecte (20, 53) pour le support de came (38) comprend au moins un élément en complémentarité de forme qui peut être amené en prise avec au moins un pendant sur le support de came (38).

10. Outil à main mécanique selon l'une des revendications précédentes, **caractérisé en ce qu'**au moins un dispositif de collecte (20, 53) pour le support de came (38) comprend comme élément en complémentarité de forme une saillie en complémentarité de forme (24, 54) et comme pendant de celle-ci au moins une réception en complémentarité de forme prévue sur le support de came (38).

11. Outil à main mécanique selon l'une des revendications précédentes, **caractérisé en ce qu'**au moins un dispositif de collecte (20, 53) peut être commandé au moyen d'un élément à actionnement manuel.

12. Outil à main mécanique selon l'une des revendications précédentes, **caractérisé en ce que** l'excentrique de levage (34) rotatif forme une partie du dispositif de déviation et **en ce que** le support de came (38) bloqué au moyen du dispositif de collecte (20, 53) est déviable par l'excentrique de levage (34) rotatif.

13. Outil à main mécanique selon l'une des revendications précédentes, **caractérisé en ce que** le support de came (38) est réalisé en forme d'arc et repose sur le côté extérieur de l'excentrique de levage (34), le support de came (38) entourant l'excentrique de levage (34) sur son périmètre, au moins partiellement, de préférence complètement.

14. Outil à main mécanique selon l'une des revendications précédentes, **caractérisé en ce qu'**au moins un dispositif de collecte (20, 53) pour le support de came (38) reposant sur l'excentrique de levage (34) présente une pluralité de réceptions en complémentarité de forme qui sont formées par des espaces intermédiaires des dents d'une denture (48) sur le support de came (38) se suivant les uns les autres sur le périmètre du support de came (38).

15. Outil à main mécanique selon l'une des revendications précédentes, **caractérisé en ce que** le dispositif de blocage d'entraînement pour le support de came (38) comprend un élément de pression sollicitant de manière durable le support de came (38) et **en ce que** lorsque l'on surmonte une complémentarité de forme et/ou de frottement agissant entre le support de came (38) et l'élément de pression, le dispositif de blocage d'entraînement peut être débloqué et le support de came (38) est entraînable dans l'espace intermédiaire entre l'excentrique de levage (34) et l'élément d'entraînement côté outil (25) par l'excentrique de levage (34) rotatif par déplacement de la came de réglage (40).

16. Outil à main mécanique selon l'une des revendications précédentes, **caractérisé en ce que** l'élément de pression du dispositif de blocage d'entraînement pour le support de came (38) est formé par l'élément d'entraînement côté outil (25).

17. Outil à main mécanique selon l'une des revendications précédentes sous forme d'une cisaille pour fendre particulièrement des tôles (11), **caractérisé en ce que** l'outil de travail (26) est formé par le un bras prévu comme bras de découpe et que l'élément d'entraînement côté outil (25) est formé par l'autre bras prévu comme bras d'entraînement d'un levier de cisaille (5) à deux bras placé de manière à pouvoir pivoter sur un axe de pivotement et **en ce que** le bras de découpe présente deux lames longitudinales (27) s'étendant dans un sens d'avancement de l'outil et étant distantes l'une de l'autre transversalement au sens d'avancement de l'outil ainsi qu'une lame transversale (28) s'étendant transversalement aux lames longitudinales (27) sur l'extrémité éloignée de l'axe de pivotement du bras de découpe, et des contre-lames longitudinales (29) ainsi qu'une contre-lame transversale (30) sont associées sur un boîtier de cisaille aux x lames longitudinales (27) ainsi qu'à la lame transversale (28) sur le bras de découpe, moyennant quoi en déplacant la came de réglage (40) du support de came (38) dans l'espace intermédiaire entre l'excentrique de levage (34) et le bras d'entraînement du levier de cisaille (5), la cisaille peut être au choix amenée dans un état de fonctionnement dans lequel seules les lames longitudinales (27) et les contre-lames longitudinales (29) se croisent l'une l'autre ou dans un état de fonctionnement dans lequel la lame transversale (28) et la contre-lame transversale (30) se croisent également l'une l'autre.
